# EUROPEAN PATENT APPLICATION

(11) **EP 4 458 915 A1**
(43) Date of publication of application: **06.11.2024**
(21) Application number: 24172018.4
(22) Date of filing: 23.04.2024
(51) Int. Cl.: C09D 11/14, C09D 11/38, C09D 11/322

(54) **AQUEOUS INK FOR INK JET RECORDING, INK JET RECORDING DEVICE, AND INK JET RECORDING METHOD**

(30) Priority: 01.05.2023 JP 2023075596
(71) Applicant: Brother Kogyo Kabushiki Kaisha, Nagoya-shi, Aichi-ken 467-8561 (JP)
(72) Inventor: ISOGAI, Masato, Nagoya, 467-8562 (JP); TSUZAKA, Yuka, Nagoya, 467-8562 (JP); NISHIDA, Satoshi, Nagoya, 467-8562 (JP); MIYAGAWA, Nanako, Nagoya, 467-8562 (JP)
(74) Representative: Prüfer & Partner mbB Patentanwälte · Rechtsanwälte

(57) **Abstract**

An aqueous ink for ink jet recording includes: a polysaccharide; a coloring agent; and water. The polysaccharide includes at least one of a polysaccharide having a glucose skeleton in a structure, and a derivative thereof, and a viscosity of a 30 wt% aqueous solution of the polysaccharide measured at 25°C is 10.0 mPa·s or less.

## Description

### REFERENCE TO RELATED APPLICATIONS

This application claims priority from Japanese Patent Application No. 2023-075596 filed on May 1, 2023. The entire contents of the priority application is incorporated herein by reference.

### BACKGROUND ART

Examples of an aqueous ink for inkjet recording generally include one described in a related art.

In response to increased awareness of environmental issues in recent years, an aqueous ink for ink jet recording is also required to reduce environmental impact thereof. On the other hand, a general aqueous ink for ink jet recording as disclosed in the related art may contain a petroleum-derived water-soluble solvent in order to improve properties of the aqueous ink for ink jet recording.

### SUMMARY

Therefore, an object of the present disclosure is to provide an aqueous ink for ink jet recording, an inkjet recording device, and an inkjet recording method, which improve properties of the aqueous ink for ink jet recording by using a plant-derived polysaccharide.

In order to achieve the above object, an aqueous ink for inkjet recording according to the present disclosure includes:
a polysaccharide;
a coloring agent; and
water, in which
the polysaccharide includes at least one of a polysaccharide having a glucose skeleton in a structure, and a derivative thereof, and a viscosity of a 30 wt% aqueous solution of the polysaccharide measured at 25°C is 10.0 mPa-s or less.

An inkjet recording device according to the present disclosure includes:
an ink flow path; and
an ink ejecting unit, in which
the ink ejecting unit is configured to eject the aqueous ink for inkjet recording according to the present disclosure supplied to the ink flow path onto a recording medium.

An inkjet recording method according to the present disclosure includes:
a recording, in which
the recording includes applying an aqueous ink to a recording medium using an ink jet method, and
the aqueous ink is the aqueous ink for inkjet recording according to the present disclosure.

With the aqueous ink for inkjet recording according to the present disclosure, it is possible to improve properties of the aqueous ink for inkjet recording by using a plant-derived polysaccharide.

### BRIEF DESCRIPTION OF DRAWINGS

FIGURE is a schematic perspective view showing a configuration of an example of an inkjet recording device according to the present disclosure.

### DESCRIPTION

In the present disclosure, the term "mass" may be referred to as "weight" unless otherwise specified. For example, "mass ratio" may be referred to as "weight ratio" unless otherwise specified, and "mass%" may be referred to as "wt%" unless otherwise specified.

In addition, when referring to a mechanism in the following embodiments and Examples, the described mechanism is merely an assumption, and the present disclosure is not limited to the described mechanism.

### Aqueous Ink for Ink Jet Recording

An aqueous ink for inkjet recording according to the present disclosure (hereinafter, sometimes referred to as an "aqueous ink" or an "ink") will be described. The aqueous ink according to the present disclosure contains a polysaccharide, a coloring agent, and water.

As the polysaccharide, at least one of a polysaccharide having a glucose skeleton in a structure, and a derivative thereof is contained. The polysaccharide may be, for example, a polysaccharide having a glucose skeleton in the structure. The glucose skeleton may have, for example, at least one of an α-glucose skeleton and a β-glucose skeleton. In addition, the glucose skeleton may have, for example, at least one of a D-glucose skeleton and an L-glucose skeleton. The glucose skeleton is preferably a β-D-glucose skeleton, for example. That is, for example, as the polysaccharide, a polysaccharide having a β-D-glucose skeleton in the structure may be contained, or for example, the polysaccharide may be the polysaccharide having a β-D-glucose skeleton in the structure.

The polysaccharide may, for example, further has a fructose skeleton in the structure. Examples of the polysaccharide having a fructose skeleton in the structure include inulin.

The polysaccharide may, for example, further has a sorbitol skeleton in the structure. Examples of the polysaccharide having a sorbitol skeleton in the structure include a polydextrose.

A viscosity of a 30 wt% aqueous solution of the polysaccharide measured at 25°C is 10.0 mPa·s or less. Note that, an upper limited value of the viscosity may be, for example, 9.0 mPa·s or less, 8.0 mPa·s or less, 7.0 mPa·s or less, 6.0 mPa·s or less, 5.0 mPa·s or less, or 4.5 mPa-s or less, and a lower limit value thereof is not particularly limited, and may be, for example, 1.0 mPa·s or more, 1.2 mPa·s or more, 1.5 mPa·s or more, 1.7 mPa·s or more, 2.0 mPa·s or more, or 2.2 mPa·s or more.

In the aqueous ink according to the present disclosure, a solid content of the polysaccharide may be, for example, 1.0 wt% or more, 2.0 wt% or more, or 5.0 wt% or more, may be 20.0 wt% or less, 18.0 wt% or less, 15.0 wt% or less, 10.0 wt% or less, or 8.0 wt% or less, and may be, for example, 1.0 wt% to 20.0 wt%, 1.0 wt% to 18.0 wt%, 2.0 wt% to 15.0 wt%, or 2.0 wt% to 8.0 wt%, based on a total weight of the aqueous ink.

The coloring agent may include, for example, a pigment, or a dye.

The pigment is not particularly limited, and examples thereof include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. Other pigments may be used as long as the pigment can be dispersed in an aqueous phase. Specific examples of these pigments include: C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments.

The pigment may be, for example, one that is dispersed in a solvent using a resin dispersant (also referred to as a resin dispersion pigment). As the resin dispersant, for example, a general polymer dispersant (also referred to as a resin for pigment dispersion or a resin dispersant) may be used, and the resin dispersant may be prepared. In addition, in the aqueous ink according to the present disclosure, the pigment may be encapsulated with a polymer. As the resin dispersant, for example, those containing at least one of methacrylic acid and acrylic acid as a monomer can be used, and for example, a commercially available product may be used. The resin dispersant may be, for example, a block copolymer, a graft copolymer, or a random copolymer made of hydrophobic monomers such as styrene, a styrene derivative, vinylnaphthalene, a vinylnaphthalene derivative, aliphatic alcohol esters of α,β-ethylenically unsaturated carboxylic acids, or two or more monomers selected from the group consisting of acrylic acid, an acrylic acid derivative, maleic acid, a maleic acid derivative, itaconic acid, an itaconic acid derivative, fumaric acid, and a fumaric acid derivative, or a salt thereof. Examples of the commercially available product include: "Joncryl (registered trademark) 611 ", "Joncryl (registered trademark) 60", "Joncryl (registered trademark) 586", "Joncryl (registered trademark) 687", "Joncryl (registered trademark) 63", and "Joncryl (registered trademark) HPD296" manufactured by Johnson Polymer Co., Ltd.; "Disperbyk 190" and "Disperbyk 191" manufactured by BYK; and "Solsperse 20000" and "Solsperse 27000" manufactured by Zeneca Corporation.

Examples of a method for dispersing the pigment using the resin for pigment dispersion include dispersing the pigment using a dispersing device. The dispersing device used for dispersing the pigment is not particularly limited as long as the dispersing device is a general disperser, and examples thereof include a ball mill, a roll mill, and a sand mill (for example, a high-speed type sand mill).

The pigment may be a self-dispersion type pigment. The self-dispersion type pigment can be dispersed in water without using a dispersant, for example, by introducing at least one of a hydrophilic functional group such as a carbonyl group, a hydroxy group, a carboxylic acid group, a sulfonic acid group, and a phosphoric acid group, and a salt thereof into pigment particles by chemical bonding, either directly or through other groups. As the self-dispersion type pigment, for example, pigments treated by methods described in related art can be used. As a raw material of the self-dispersion type pigment, either an inorganic pigment or an organic pigment can be used. In addition, examples of the pigment suitable for the treatment include carbon black such as "MA8" and "MA100" manufactured by Mitsubishi Chemical Corporation. The self-dispersion type pigment may be, for example, a commercially available product. Examples of the commercially available product include: "CAB-O-JET (registered trademark) 200", "CAB-O-JET (registered trademark) 250C", "CAB-O-JET (registered trademark) 260M", "CAB-O-JET (registered trademark) 270Y", "CAB-O-JET (registered trademark) 300", "CAB-O-JET (registered trademark) 400", "CAB-O-JET (registered trademark) 450C", "CAB-O-JET (registered trademark) 465M", and "CAB-O-JET (registered trademark) 470Y" manufactured by Cabot Corporation; "BONJET (registered trademark) BLACK CW-2" and "BONJET (registered trademark) BLACK CW-3" manufactured by ORIENT CHEMICAL INDUSTRIES CO., LTD; and "LIOJET (registered trademark) WD BLACK 002C" manufactured by TOYO INK CO., LTD.

A solid content of the pigment (pigment solid content) in a total amount of the aqueous ink is not particularly limited, and can be appropriately determined depending on, for example, a desired optical density and chroma. The pigment solid content is, for example, 0.1 mass% to 20 mass%, 1 mass% to 15 mass%, or 2 mass% to 10 mass%.

The pigment may be used alone or in combination of two or more types thereof.

The dye is not particularly limited, and examples thereof include a direct dye, an acid dye, a basic dye, and a reactive dye. Specific examples of the dye include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black. Examples of the C.I. Direct Black include C.I. Direct Black 17, 19, 32, 51, 71, 108, 146, 154, and 168. Examples of the C.I. Direct Blue include C.I. Direct Blue 6, 22, 25, 71, 86, 90, 106, and 199. Examples of the C.I. Direct Red include C.I. Direct Red 1, 4, 17, 28, 83, and 227. Examples of the C.I. Direct Yellow include C.I. Direct Yellow 12, 24, 26, 86, 98, 132, 142, and 173. Examples of the C.I. Direct Orange include C.I. Direct Orange 34, 39, 44, 46, and 60. Examples of the C.I. Direct Violet include C.I. Direct Violet 47 and 48. Examples of the C.I. Direct Brown include C.I. Direct Brown 109. Examples of the C.I. Direct Green include C.I. Direct Green 59. Examples of the C.I. Acid Black include C.I. Acid Black 2, 7, 24, 26, 31, 52, 63, 112, and 118. Examples of the C.I. Acid Blue include C.I. Acid Blue 9, 22, 40, 59, 90, 93, 102, 104, 117, 120, 167, 229, and 234. Examples of the C.I. Acid Red include C.I. Acid Red 1, 6, 32, 37, 51, 52, 80, 85, 87, 92, 94, 115, 180, 256, 289, 315, and 317. Examples of the C.I. Acid Yellow include C.I. Acid Yellow 11, 17, 23, 25, 29, 42, 61, and 71. Examples of the C.I. Acid Orange include C.I. Acid Orange 7 and 19. Examples of the C.I. Acid Violet include C.I. Acid Violet 49. Examples of the C.I. Basic Black include C.I. Basic Black 2. Examples of the C.I. Basic Blue include C.I. Basic Blue 1, 3, 5, 7, 9, 24, 25, 26, 28, and 29. Examples of the C.I. Basic Red include C.I. Basic Red 1, 2, 9, 12, 13, 14, and 37. Examples of the C.I. Basic Violet include C.I. Basic Violet 7, 14, and 27. Examples of the C.I. Food Black include C.I. Food Black 1 and 2.

A solid content of the dye (dye solid content) in the total amount of the aqueous ink is not particularly limited, and can be appropriately determined depending on, for example, a desired optical density and chroma. The dye solid content is, for example, 0.1 wt% to 20 wt%, and preferably 0.3 wt% to 10 wt%.

The dye may be used alone or in combination of two or more types thereof.

The water may be ion exchanged water, pure water, or the like.

The water may be the main solvent. In the present disclosure, the term "main solvent" refers to the most abundant component among components constituting the solvent. A blending amount (water proportion) of the water with respect to the total amount of the aqueous ink is appropriately determined according to desired ink properties and the like. The water proportion may be, for example, the balance except for other components. For example, the blending amount of the water is 50 mass% to 95 mass%, preferably 55 mass% to 90 mass%, and more preferably 60 mass% to 80 mass%.

The aqueous ink may further contain, for example, a water-soluble solvent as a solvent other than the water. The water-soluble solvent is, for example, a plant-derived water-soluble solvent. Examples of the plant-derived water-soluble solvent include glycerin.

The aqueous ink may further contain, for example, a surfactant.

The surfactant is not particularly limited and may be appropriately selected depending on a purpose, and, for example, a commercially available product may be used. Specific examples of the surfactant include a silicone-based surfactant and an acetylene-based surfactant.

Examples of a commercially available product of the silicone-based surfactant include "SILFACE (registered trademark) SAG002", "SILFACE (registered trademark) SAG005", and "SILFACE (registered trademark) SAG503A" manufactured by Nissin Chemical Industry Co., Ltd.

Examples of a commercially available product of the acetylene-based surfactant include: "OLFINE (registered trademark) E1004", "OLFINE (registered trademark) E1008", and "OLFINE (registered trademark) E1010" manufactured by Nissin Chemical Industry Co., Ltd.; "SURFYNOL (registered trademark) 440", "SURFYNOL (registered trademark) 465", and "SURFYNOL (registered trademark) 485" manufactured by Air Products & Chemicals Inc.; and "Acetylenol (registered trademark) E40" and "Acetylenol (registered trademark) E100" manufactured by Kawaken Fine Chemicals Co., Ltd.

The aqueous ink may contain other surfactants in addition to or instead of the silicone-based surfactant or the acetylene-based surfactant. Examples of the other surfactants include: nonionic surfactants "EMULGEN (registered trademark)" series, "RHEODOL (registered trademark)" series, "EMASOL (registered trademark)" series, "EXCEL (registered trademark)" series, "EMANON (registered trademark)" series, "AMIET (registered trademark)" series, and "AMINON (registered trademark)" series manufactured by Kao Corporation; nonionic surfactants "SORBON (registered trademark)" series manufactured by TOHO Chemical Industry Co., Ltd.; nonionic surfactants "DOBANOX (registered trademark)" series, "LEOCOL (registered trademark)" series, "LEOX (registered trademark)" series, "LAOL, LEOCOL (registered trademark)" series, "LIONOL (registered trademark)" series, "CADENAX (registered trademark)" series, "LIONON (registered trademark)" series, and "LEOFAT (registered trademark)" series manufactured by Lion Corporation; anionic surfactants "EMAL (registered trademark)" series, "LATEMUL (registered trademark)" series, "VENOL (registered trademark)" series, "NEOPELEX (registered trademark)" series, NS SOAP, KS SOAP, OS SOAP, and "PELEX (registered trademark)" series manufactured by Kao Corporation; anionic surfactants "LIPOLAN (registered trademark)" series, "LIPON (registered trademark)" series, "SUNNOL (registered trademark)" series, "LIPOTAC (registered trademark) TE, ENAGICOL" series, "LIPAL (registered trademark)" series, and "LOTAT (registered trademark)" series manufactured by Lion Corporation; and cationic surfactants "CATIOGEN (registered trademark) ES-OW" and "CATIOGEN (registered trademark) ES-L" manufactured by DKS Co. Ltd.

The surfactant may be used alone or in combination of two or more types thereof.

The aqueous ink may further contain an additive known in the related art, if necessary. Examples of the additive include a pH adjuster, a viscosity modifier, a surface tension regulator, and an antifungal agent. Examples of the viscosity modifier include polyvinyl alcohol, cellulose, and a water-soluble resin.

The aqueous ink according to the present disclosure is, for example, an aqueous ink for performing recording on a recording medium containing a polyvalent metal salt. Examples of the polyvalent metal salt include aluminum chloride, aluminum bromide, aluminum sulfate, aluminum nitrate, aluminum acetate, barium chloride, barium bromide, barium iodide, barium oxide, barium nitrate, barium thiocyanate, calcium chloride, calcium bromide, calcium iodide, calcium nitrite, calcium nitrate, calcium dihydrogen phosphate, calcium thiocyanate, calcium lactate, calcium fumarate, calcium citrate, copper chloride, copper bromide, copper sulfate, copper nitrate, copper acetate, iron chloride, iron bromide, iron iodide, iron sulfate, iron nitrate, iron oxalate, iron lactate, iron fumarate, iron citrate, magnesium chloride, magnesium bromide, magnesium iodide, magnesium sulfate, manganese sulfate, manganese nitrate, manganese dihydrogen phosphate, manganese acetate, manganese salicylate, manganese benzoate, manganese lactate, nickel chloride, nickel bromide, nickel sulfate, nickel nitrate, nickel acetate, tin sulfate, titanium chloride, zinc chloride, zinc bromide, zinc sulfate, zinc nitrate, zinc thiocyanate, and zinc acetate. A water-soluble calcium salt is preferred. The recording medium containing the water-soluble calcium salt is not particularly limited, and examples thereof include a recording sheet containing a larger amount of inorganic filler such as calcium carbonate than ordinary plain paper. For example, Hammermill Fore Multi-Purpose Paper manufactured by International Paper may be used.

Note that, when the aqueous ink according to the present disclosure is the aqueous ink for performing recording on a recording medium containing a polyvalent metal salt, the aqueous ink according to the present disclosure preferably contains the resin dispersion pigment as the coloring agent in order to improve an OD value described in Examples to be described later. The mechanism for improving the OD value is that, for example, when the resin dispersion pigment is contained as the coloring agent, the resin dispersant contained in the resin dispersion pigment and the polysaccharide are partially bonded to each other, and the polysaccharide is present on the surface of the pigment. When the polysaccharide is present on the surface of the pigment, after performing recording on the recording medium with the aqueous ink, the polyvalent metal salt contained in the recording medium tends to react with the polysaccharide on the surface of the pigment or with the resin dispersion pigment containing the resin dispersant bonded to the polysaccharide. As a result, the resin dispersion pigment aggregates on the surface of the recording medium, which is thought to improve the OD value.

Note that, when the polyvalent metal salt is directly added to the aqueous ink according to the present disclosure, the aqueous ink may aggregate before printing on the recording medium, resulting in poor storage stability. In addition, when a recording medium that does not contain the polyvalent metal salt is coated with a treatment liquid containing the polyvalent metal salt, and then with the aqueous ink according to the present disclosure, the recording medium becomes wet after applying the treatment liquid containing the polyvalent metal salt, and therefore, problems such as curling of the recording medium or smearing of the applied aqueous ink may occur. On the other hand, it is preferable to perform recording on a recording medium containing a polyvalent metal salt with the aqueous ink according to the present disclosure, since the above problems such as poor storage stability, curling, and ink smearing do not occur.

### Ink Jet Recording Device and Ink Jet Recording Method

Next, an inkjet recording device and an inkjet recording method according to the present disclosure will be described.

The inkjet recording device according to the present disclosure includes: an ink flow path; and an ink ejecting unit, in which the aqueous ink for inkjet recording according to the present disclosure supplied to the ink flow path is ejected onto a recording medium by the ink ejecting unit.

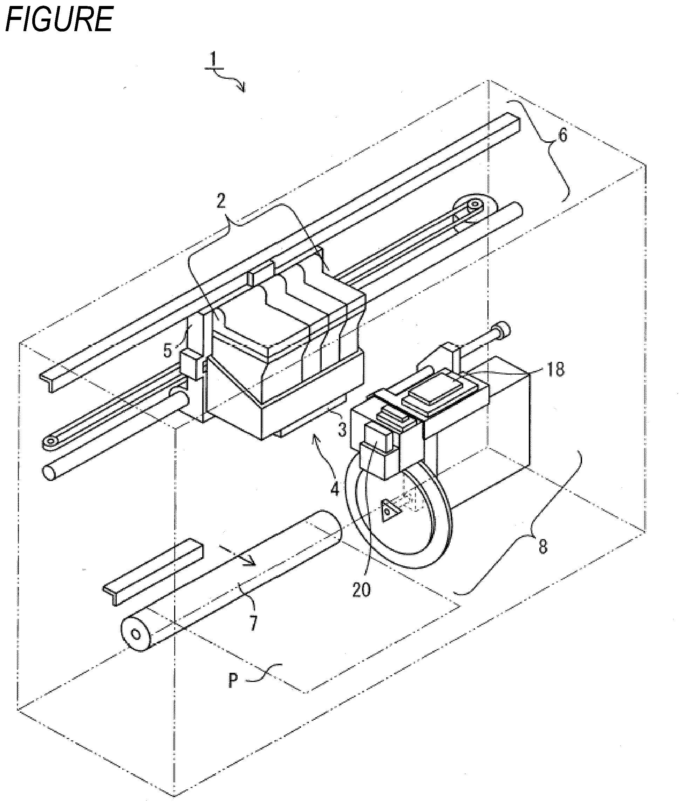

FIGURE shows a configuration of an example of the inkjet recording device according to the present disclosure. As shown in the FIGURE, an inkjet recording device 1 includes four ink storage units (ink cartridges 2), an ink ejecting unit (ink jet head) 3, a head unit 4, a carriage 5, a drive unit 6, a platen roller 7, and a purge device 8 as main components.

The four ink cartridges 2 each contain one color of aqueous ink of four colors: yellow, magenta, cyan, and black. For example, at least one of the four color aqueous inks is the aqueous ink according to the present disclosure. In this example, a set of four ink cartridges 2 is shown, but instead of this, an integrated ink cartridge which is partitioned so as to form an aqueous yellow ink storage unit, an aqueous magenta ink storage unit, an aqueous cyan ink storage unit, and an aqueous black ink storage unit therein may be used. As a main body of the ink cartridge, for example, an ink cartridge known in the related art can be used.

The inkjet head 3 provided in the head unit 4 performs recording on a recording sheet P. The recording sheet P is, for example, a recording medium containing a polyvalent metal salt. The polyvalent metal salt may be the same as the polyvalent metal salt in the above description of the aqueous ink. The four ink cartridges 2 and the head unit 4 are mounted on the carriage 5. The drive unit 6 reciprocates the carriage 5 in a linear direction. As the drive unit 6, for example, a drive unit known in the related art can be used (see related art). The platen roller 7 extends in a reciprocating direction of the carriage 5 and is disposed in a manner of facing the ink jet head 3.

The inkjet head 3 is formed by stacking a plurality of thin plates made of a metal, for example. A through hole is formed in each of the thin plates. By stacking the plurality of thin plates in which the through hole is formed, a flow path for passing the aqueous ink is formed. The thin plates are bonded by, for example, an adhesive.

The purge device 8 suctions a defective ink containing air bubbles and the like accumulated in the inkjet head 3. As the purge device 8, for example, a purge device known in the related art can be used (see related art).

A wiper member 20 is disposed adjacent to the purge device 8 on a platen roller 7 side of the purge device 8. The wiper member 20 is formed in a spatula shape and wipes a nozzle forming surface of the inkjet head 3 as the carriage 5 moves. In FIGURE, a cap 18 covers a plurality of nozzles of the inkjet head 3 to be returned to a reset position when recording is completed in order to prevent drying of the aqueous ink.

In the inkjet recording device 1 in this example, the four ink cartridges 2 are mounted on one carriage 5 together with the head unit 4. However, the present disclosure is not limited thereto. In the inkjet recording device 1, each of the four ink cartridges 2 may be mounted on a carriage different from the head unit 4. In addition, each of the four ink cartridges 2 may be disposed and fixed in the inkjet recording device 1 without being mounted on the carriage 5. In these aspects, for example, each of the four ink cartridges 2 and the head unit 4 mounted on the carriage 5 are connected by a tube or the like, and the aqueous ink is supplied from each of the four ink cartridges 2 to the head unit 4. In addition, in these aspects, four ink bottles each having a bottle shape may be used instead of the four ink cartridges 2. In this case, it is preferable that the ink bottle is provided with an injection port for injecting the ink from an outside to an inside.

Ink jet recording using the inkjet recording device 1 is performed as follows, for example. First, the recording sheet P is fed from a sheet feeding cassette (not shown) provided on a lateral side or a lower side of the inkjet recording device 1. The recording sheet P is introduced between the inkjet head 3 and the platen roller 7. Predetermined recording is performed on the introduced recording sheet P with the aqueous ink ejected from the inkjet head 3. The recording sheet P after the recording is discharged from the inkjet recording device 1. In FIGURE, a sheet feeding mechanism and a sheet discharging mechanism for the recording sheet P are not shown.

In the device shown in FIGURE, a serial type inkjet head is used, but the present disclosure is not limited thereto. The inkjet recording device may be a device using a line type inkjet head or roll-to-roll. Note that, the serial type inkjet head is an inkjet head that performs printing while reciprocating the inkjet head in the width direction of the recording medium. The line type inkjet head is an inkjet head that covers the recording medium in the entire width direction thereof. The roll-to-roll is a method for sending out and performing printing on the recording medium in a roll shape, and winding the recording medium in a roll shape again.

Next, the inkjet recording method according to the present disclosure includes: a recording step, in which the recording step includes a step of performing recording by applying an aqueous ink to a recording medium using an inkjet method, and the aqueous ink is the aqueous ink for inkjet recording according to the present disclosure. The inkjet recording method according to the present disclosure can be performed by, for example, using the inkjet recording device according to the present disclosure. The recording includes printing words, printing an image, or printing. The recording medium is, for example, a recording medium containing a polyvalent metal salt. The polyvalent metal salt may be the same as the polyvalent metal salt in the above description of the aqueous ink.

### EXAMPLES

Next, Examples of the present disclosure will be described together with Comparative Examples. Note that the present disclosure is not limited or restricted by the following Examples and Comparative Examples.

### Preparation of Pigment Dispersion Liquid A

Pure water was added to 20 mass% of a pigment (C.I. Pigment Blue 15:3) and 7 mass% of neutralized sodium hydroxide of a styrene-acrylic acid copolymer (acid value: 50 mgKOH/g, molecular weight: 10000) to make a total of 100 mass%, followed by stirring and mixing, to obtain a mixture. This mixture was charged into a wet sand mill filled with zirconia beads having a diameter of 0.3 mm and subjected to a dispersion treatment for 6 hours. Thereafter, the zirconia beads were removed using a separator, and the resultant was filtered through a cellulose acetate filter having a pore diameter of 3.0 µm to obtain a pigment dispersion liquid A. Note that, the styrene-acrylic acid copolymer is a water-soluble polymer that is generally used as a dispersant for pigments.

### Preparation of Pigment Dispersion Liquid B

Carbon black "#2650" (40 g) manufactured by Mitsubishi Chemical Corporation was mixed with 200 g of ion-exchanged water, followed by pulverization in a bead mill. A carboxy group agent was added thereto, followed by heating and stirring, and an oxidation treatment. Subsequently, the obtained liquid was washed several times with a solvent, poured into water, washed again with water, and then filtered through a filter to obtain a pigment dispersion liquid B. The average particle diameter of the carbon black contained in this pigment dispersion liquid B was measured using "LB-550" manufactured by Horiba, Ltd., and was found to be 153 nm.

### Examples 1 to 9, Comparative Examples 1 to 3, and Reference Examples 1 and 2

The components in aqueous ink compositions (Table 1 and Table 2) except for a coloring material (coloring agent) were mixed uniformly to obtain an ink solvent. Next, the coloring material was added to the ink solvent, followed by uniform mixing. Thereafter, the obtained mixture was filtered through a cellulose acetate type membrane filter (pore diameter: 3.00 µm) manufactured by TOYO ROSHI KAISHA, LTD. to obtain an aqueous ink for inkjet recording in each of Examples 1 to 9, Comparative Examples 1 to 3, and Reference Examples 1 and 2 shown in Table 1.

Note that, the viscosity of the 30 wt% aqueous solution of the polysaccharide measured at 25°C, which was described in Table 1, was evaluated by the following procedure. First, the polysaccharide was uniformly mixed in water to form a 30 wt % aqueous solution. Next, the viscosity of the obtained aqueous solution was measured under conditions of 25°C using a viscometer (model: TVE-25, manufactured by Toki Sangyo Co., Ltd.).

Regarding the aqueous inks in Examples 1 to 9, Comparative Examples 1 to 3, and Reference Examples 1 and 2, environmental compatibility, ejection stability, evaporation properties, and optical density (OD value) were evaluated by the following methods.

### Environmental Compatibility

The aqueous inks in Examples 1 to 9 and Comparative Examples 1 to 3 were evaluated according to the following evaluation criteria.

### Evaluation criteria for environmental compatibility

A: contains only plant-derived raw materials as the water-soluble solvent and the polysaccharide
C: contains raw materials other than plant-derived raw materials as the water-soluble solvent and the polysaccharide

### Ejection Stability

Using an inkjet recording device DCP-J987N manufactured by BROTHER INDUSTRIES, LTD., solid images were recorded using the aqueous inks in Examples 1 to 9 and Comparative Example 1 on a recording sheet (product name: Hammermill Fore Multi-Purpose Paper, manufactured by International Paper) containing a water-soluble calcium salt as a polyvalent metal salt to prepare evaluation samples. A lead chipping was evaluated according to the following evaluation criteria. Note that, the term "lead chipping" refers to a situation where the beginning of printing fails during solid printing, and the leading portion remains blank.

### Evaluation criteria for ejection stability

A: there is no lead chipping during solid printing
B: there is lead chipping during solid printing

### Evaporation Properties

Each of the aqueous inks (5 g) in Examples 1 to 9 and Comparative Example 1 was poured into an open bottle (diameter: 20 mm) and stored in a constant temperature bath at a temperature of 60°C and a relative humidity of 40% until there was no change in weight (stored for 5 days). Thereafter, the temperature was returned to room temperature (25°C), and the state of the aqueous ink in the open bottle was visually observed and evaluated according to the following evaluation criteria.

### Evaluation criteria for evaporation properties

A: there is fluidity or thixotropy after complete evaporation
B: there is no fluidity or thixotropy after complete evaporation

### Optical Density (OD Value)

Using an inkjet recording device DCP-J987N manufactured by BROTHER INDUSTRIES, LTD., images were recorded using the aqueous inks in Examples 1 to 9, Comparative Example 1, and Reference Examples 1 and 2 on a recording sheet (product name: Hammermill Fore Multi-Purpose Paper, manufactured by International Paper) containing a water-soluble calcium salt as a polyvalent metal salt to prepare evaluation samples. The optical density (OD value) at three locations in each of the evaluation samples was measured using a spectrophotometer SpectroEye (Light source: D₅₀, viewing angle: 2°, ANSI-T) manufactured by X-Rite, and the OD value was determined based on the average value. The OD values in Examples 1 to 9 and Comparative Example 1 were compared with the OD values (reference values) in Reference Examples 1 and 2, and evaluated according to the following evaluation criteria. Note that, the OD value in Reference Example 1 was defined as a "reference value of the OD value in a case of using a resin dispersion pigment", and the OD value in Reference Example 2 was defined as a "reference value of the OD value in a case of using a self-dispersion type pigment".

### Evaluation criteria for optical density (OD value)

A: the OD value is improved from the reference value
B: the OD value is not improved from the reference value

The aqueous ink composition and the evaluation result of the aqueous ink in each of Examples 1 to 9, Comparative Examples 1 to 3, and Reference Examples 1 and 2 are shown in Table 1 and Table 2.

**[Table 1]**

| Composition | | | Feature | Example | | | | | | | | | Comparative Example | | |
|---|---|---|---|---|---|---|---|---|---|---|---|---|---|---|---|
| | | | | 1 | 2 | 3 | 4 | 5 | 6 | 7 | 8 | 9 | 1 | 2 | 3 |
| Solvent | Water | | - | Balan ce | Balan ce | Balan ce | Balan ce | Balan ce | Balan ce | Balan ce | Balan ce | Balan ce | Balan ce | Balance | Balance |
| Water-soluble solvent | 86% Glycerin | | Plant-derived raw material | 23.00 | 31.00 | | 15.00 | 29.00 | 29.00 | 29.00 | 23.00 | 30.50 | 23.00 | 23.00 | 23.00 |
| | Triethylene glycol | | Petroleum-derived raw material | | | | | | | | | | 5.00 | | |
| Polysacchar ide | Having glucose skeleton | Inulin | Plant-derived raw material, viscosity of 30 wt% aqueous solution: 4.3 mPa·s | 5.00 | 1.00 | 18.00 | 10.00 | 2.00 | 15.00 | 8.00 | | 5.00 | | | |
| | | Polydextro se | Plant-derived raw material, viscosity of 30 wt% aqueous solution: 2.4 mPa·s | | | | | | | | 5.00 | | | | |
| | | Glucoman nan | Plant-derived raw material, viscosity of 30 wt% aqueous solution: not measurable due to insolubility | | | | | | | | | | | 5.00 | |
| | Having no glucose skeleton | Pectin | Plant-derived raw material, viscosity of 30 wt% aqueous solution: not measurable due to insolubility | | | | | | | | | | | | 5.00 |
| Surfactant | OLFINE^{®} E1010 (*1) | | - | 0.50 | 0.50 | 0.50 | 0.50 | 0.50 | 0.50 | 0.50 | 0.50 | 0.50 | 0.50 | 0.50 | 0.50 |
| Coloring agent | Pigment dispersion liquid A (11%) (*2) | | - | 36.36 | 36.36 | 36.36 | 36.36 | 36.36 | 36.36 | 36.36 | 36.36 | | 36.36 | 36.36 | 36.36 |
| | Pigment dispersion liquid B (15.2%) (*3) | | - | | | | | | | | | 26.32 | | | |

**[Table 1 continued]**

| Composition | | Feature | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Effect | Environmental compatibility | A: contains only plant-derived raw materials as water-soluble solvent and polysaccharide | A | A | A | A | A | A | A | A | A | C | A | A |
| | | C: contains raw materials other than plant-derived raw materials as water-soluble solvent and polysaccharide | | | | | | | | | | | | |
| | Ejection stability | A: no lead chipping during solid printing | A | A | B | A | A | A | A | A | A | A | Not measura ble | Not measurabl e |
| | | B: lead chipping during solid printing | | | | | | | | | | | | |
| | Evaporation properties | A: fluidity or thixotropy after complete evaporation | A | A | B | B | A | B | A | A | A | A | - | - |
| | | B: no fluidity or thixotropy after complete evaporation | | | | | | | | | | | | |
| | OD value | A: OD value is improved from reference value | 1.11 | 1.65 | 1.13 | 1.12 | 1.06 | 1.10 | 1.07 | 1.69 | 1.07 | 1.07 | - | - |
| | | | A | B | A | A | A | A | A | A | B | A | - | - |
| | | B: OD value is not improved from reference value | | | | | | | | | | | | |

| | | | | | | | | | | | | | | |
|---|---|---|---|---|---|---|---|---|---|---|---|---|---|---|
| * 1: manufactured by Nissin Chemical co., ltd. *2: aqueous dispersion liquid of C.I. Pigment Blue 15:3 (containing resin dispersant) *3: aqueous dispersion liquid of self-dispersing carbon black | | | | | | | | | | | | | | |

**[Table 2]**

| Composition | | Reference Example | |
|---|---|---|---|
| | | 1 | 2 |
| Solvent | Water | Balance | Balance |
| Water-soluble solvent | 86% Glycerin | 32.00 | 36.50 |
| Surfactant | OLFINE^{®} E1010 (*1) | 0.50 | 0.50 |
| Coloring agent | Pigment dispersion liquid A (11%) (*2) | 36.36 | |
| | Pigment dispersion liquid B (15.2%) (*3) | | 26.32 |
| OD value | | 1.05 | 1.08 |

| | | | |
|---|---|---|---|
| *1: manufactured by Nissin Chemical co., ltd. *2: aqueous dispersion liquid of C.I. Pigment Blue 15:3 (containing resin dispersant) *3: aqueous dispersion liquid of self-dispersing carbon black *Reference Example 1: reference value of OD value in case of using resin dispersion pigment "Reference Example 2: reference value of OD value in case of using self-dispersion type pigment | | | |

As shown in Table 1, Examples 1 to 9 contain only plant-derived raw materials in the water-soluble solvent and the polysaccharide, and the environmental compatibility evaluation is "A". The ejection stability evaluation is also "B" or higher, and the properties of the aqueous ink can be improved.

In addition, in Examples 1, 3 to 8 in which a resin dispersion pigment is used and the solid content of the polysaccharide is 2.0 wt% to 15.0 wt%, the ejection stability evaluation and the optical density (OD value) are "A". Further, in Examples 1, 5, 7, and 8 in which the solid content of the polysaccharide is 2.0 wt% to 8.0 wt%, the evaluation of evaporation properties is "A".

On the other hand, Comparative Example 1 contains a petroleum-derived raw material as the water-soluble solvent (evaluated as "C"). In addition, in Comparative Example 2 in which the viscosity of a 30 wt% aqueous solution of the polysaccharide measured at 25°C is more than 10.0 mPa-s and Comparative example 3 using a polysaccharide that does not have a glucose skeleton in the structure, the ink has a too large viscosity to be ejected, and therefore, it is not possible to evaluate the ejection stability. That is, it is not possible to improve the properties of the aqueous ink.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

### INDUSTRIAL APPLICABILITY

As described above, according to the present disclosure, it is possible to improve properties of the aqueous ink for ink jet recording by using a plant-derived polysaccharide. The aqueous ink, the ink jet recording device, and the ink jet recording method according to the present disclosure can be widely applied to inkjet recording on various recording media.

### REFERENCE SIGNS LIST

1 ink jet recording device
2 ink cartridge
3 ink ejecting unit (ink jet head)
4 head unit
5 carriage
6 drive unit
7 platen roller
8 purge device

## Claims

1. An aqueous ink for ink jet recording comprising:
a polysaccharide;
a coloring agent; and
water, wherein
the polysaccharide includes at least one of a polysaccharide having a glucose skeleton in a structure, and a derivative thereof, and
a viscosity of a 30 wt% aqueous solution of the polysaccharide measured at 25°C is 10.0 mPa-s or less.

2. The aqueous ink for ink jet recording according to claim 1: wherein the polysaccharide includes a polysaccharide having a *β* -D-glucose skeleton in a structure.

3. The aqueous ink for inkjet recording according to claim 1, wherein the polysaccharide is the polysaccharide having a glucose skeleton in the structure.

4. The aqueous ink for ink jet recording according to claim 1 or 2, wherein the water is a main solvent.

5. The aqueous ink for ink jet recording according to claim 1 or 2, wherein the coloring agent is a resin dispersion pigment.

6. The aqueous ink for ink jet recording according to claim 1 or 2, wherein a solid content of the polysaccharide is 2.0 wt% to 15.0 wt% based on a total weight of the aqueous ink.

7. The aqueous ink for ink jet recording according to claim 1 or 2, wherein a solid content of the polysaccharide is 2.0 wt% to 8.0 wt% based on a total weight of the aqueous ink.

8. The aqueous ink for ink jet recording according to claim 1 or 2, wherein the polysaccharide further includes a fructose skeleton in the structure.

9. The aqueous ink for inkjet recording according to claim 8, wherein the polysaccharide is inulin.

10. The aqueous ink for ink jet recording according to claim 1 or 2, wherein the polysaccharide further includes a sorbitol skeleton in the structure.

11. The aqueous ink for ink jet recording according to claim 10, wherein the polysaccharide is a polydextrose.

12. The aqueous ink for ink jet recording according to claim 1 or 2, wherein the aqueous ink is an aqueous ink for performing recording on a recording medium containing a polyvalent metal salt.

13. An ink jet recording device comprising:
an ink flow path; and
an ink ejecting unit, wherein
the ink ejecting unit is configured to eject the aqueous ink for ink jet recording according to claim 1 or 2 supplied to the ink flow path onto a recording medium.

14. The inkjet recording device according to claim 13, wherein the recording medium is a recording medium containing a polyvalent metal salt.

15. An inkjet recording method comprising:
a recording, wherein
the recording includes applying an aqueous ink to a recording medium using an inkjet method, and
the aqueous ink is the aqueous ink for ink jet recording according to claim 1 or 2.

16. The inkjet recording method according to claim 15, wherein the recording medium is a recording medium containing a polyvalent metal salt.
